# EUROPÄISCHE PATENTSCHRIFT

(11) **EP 0 731 415 B1**
(45) Veröffentlichungstag und Bekanntmachung des Hinweises auf die Patenterteilung: **14.04.1999**
(21) Anmeldenummer: 96102940.2
(22) Anmeldetag: 28.02.1996
(51) Int. Cl.: G06K 7/06, G06K 13/08

(54) **Aufnahmegehäuse für eine Chipkarte**
Case for a chipcard
Boîtier pour carte à puce

(30) Priorität: 10.03.1995 DE 19508363
(43) Veröffentlichungstag der Anmeldung: 11.09.1996
(73) Patentinhaber: AMPHENOL-TUCHEL ELECTRONICS GmbH, D-74080 Heilbronn (DE)
(72) Erfinder: Reichardt, Manfred, 74189 Weinsberg (DE); Bleier, Robert, 74206 Bad Wimpfen (DE)
(74) Vertreter: Becker, Thomas, Dr., Dipl.-Ing.

(56) Entgegenhaltungen:
- EP-A- 0 214 478
- EP-A- 0 360 345
- WO-A-93/11626

## Beschreibung

Die Erfindung betrifft ein Aufnahmegehäuse für eine Chipkarte, wobei das Gehäuse Bestandteil eines Chipkartenlesers ist, der die Aufgabe hat, die Kontakte des auf der Karte angeordneten elektronischen Chips in einer bestimmten Endposition der Karte im Leser (Gehäuse) zu kontaktieren, um so ein "Lesen" der Informationen des Chips, aber gegebenenfalls auch ein Eingeben von Informationen in die Chipkarte zu ermöglichen.

Chipkartenleser beziehungsweise deren Gehäuse finden vielfältig Anwendung, zum Beispiel in sogenannten stationären Kartentelefonen, aber auch in Mobiltelefonen (sogenannten "handys"), Geldautomaten etc.

Chipkarten der genannten Art gibt es in Form sogenannter "Normalkarten", aber auch in verkleinerter Ausführung, den sogenannten SIM-Karten. Derartige SIM-Karten finden vor allem in Digitalnetzen für Handtelefone Anwendung und sind nur 1/10 so groß wie die im Rahmen einer ISO-Norm definierte Normalkarte. Hierdurch wird zwar über die Karte eine zusätzliche Verkleinerung des Handtelefons insgesamt ermöglicht; die Handhabung und Aufnahme der Karte sowie deren Kontaktierung innerhalb des Lesers (Gehäuses) ist jedoch meist unbefriedigend.

Bekannt ist eine Aufnahme für SIM-Karten mit einem "Klapp-Schiebedeckel". Zur Kartenaufnahme und -entnahme muß für die Schwenkbewegung des Deckels ein entsprechender Raum verfügbar sein, der gerade bei Handtelefonen oft nicht zur Verfügung steht.

Die EP 0 214 478 A2 beschreibt ein Aufnahmegehäuse gemäß Oberbegriff des Anspruchs 1. Zur Kontaktierung der Kontakte der Chipkarte mit den Kontakten eines zugehörigen Kontaktträgers wird die Chipkarte in ihrer Aufnahme um eine Schwenkachse gekippt.

Gehäuse (Leser) mit loser Kartenaufnahme sind ebenfalls bekannt. Zum Einlegen beziehungsweise Herausnehmen der SIM-Karte muß die Kartenaufnahme dabei ganz aus der Führung herausgenommen werden und kann verlorengehen.

Der Erfindung liegt entsprechend die Aufgabe zugrunde, ein Aufnahmegehäuse für eine Chipkarte, insbesondere eine in Handtelefonen einsetzbare SIM-Karte zur Verfügung zu stellen, das wenig Platz beansprucht und in welches die SIM-Karte leicht einsteckbar und bei Bedarf auch wieder entnehmbar ist sowie während ihrer Funktionsstellung sicher kontaktiert und gehalten wird.

Zur Lösung dieser Aufgabe schlägt die Erfindung ein Aufnahmegehäuse für eine Chipkarte, insbesondere für eine in Handtelefone einsetzbare SIM-Karte mit folgenden Merkmalen vor:
- einer schlitzartigen Einstecköffnung für die Chipkarte,
- einer Führungsbahn für die Chipkarte,
- einem, die Führungsbahn einseitig begrenzenden Kontaktträger, wobei
- die mit der Einstecköffnung endende Führungsbahn zwischen einem Gehäusekörper (10) und einem auf einen Gehäusekörper aufschiebbaren und von diesem über eine definierte Strecke ziehbaren Deckelteils ausgebildet ist, und
- der Deckelteil, ausgehend von einer in der ausgezogenen Lage des Deckelteils aus dem Gehäusekörper ragenden Stirnkante, eine Ausnehmung aufweist.

Ein solches Aufnahmegehäuse kann beispielsweise im Bodenteil eines Handtelefons angeordnet werden. Zum Einlegen der Karte wird der mobile Deckelteil auf nachstehend noch näher beschriebene Art und Weise herausgezogen, so daß er über den Bodenteil des Handtelefons vorsteht. Die SIM-Karte kann jetzt über die Einstecköffnung in die Führungsbahn eingelegt werden und der Deckelteil wird anschließend in die "Funktionsposition" zurückgeführt, also in den Bodenteil des Handtelefons hineingedrückt, bis seine vordere Stirnkante bündig mit den benachbarten Bauteilen des Handtelefons abschließt.

In dieser "Funktionsposition", die der "Leseposition" der SIM-Karte innerhalb des Lesers entspricht, stehen also keine Gehäuseteile über das Telefon-Gehäuse vor. Gleichwohl ist jederzeit eine Entnahme beziehungsweise ein Austausch der SIM-Karte möglich, und zwar wie folgt:

Der Deckelteil wird so gestaltet, daß seine Breite kleiner ist als eine korrespondiernde Aufnahmeöffnung im Gehäuse des Telefons, so daß sich zumindest auf einer (Schmal)seite des Deckelteils zwischen Deckelteil und Gehäuse des Telefons eine "Öffnung" befindet, in die zur Entnahme des Deckelteils ein Hilfsmittel, beispielsweise ein Kugelschreiber, hineingeführt werden kann, um so den Deckelteil wieder aus der "Leseposition" herauszuführen und anschließend über die genannte Ausnehmung oberhalb der Einstecköffnung des Deckelteils die Karte zu entnehmen.

Um die Entnahme des Deckelteils zu erleichtern, ist dieser randseitig (ein- oder beidseitig) beispielsweise mit noppenartigen Vorsprüngen ausgebildet, die sich leicht mit einem der genannten Werkzeuge hintergreifen lassen.

Das beschriebene Gehäuse weist eine extrem kleine Bauform auf und hat den weiteren Vorteil, daß es im Telefon-Gehäuse integriert ist, also allseitig vom Telefon-Gehäuse umschlossen wird und insoweit beispielsweise auch mechanische Defekte im Bereich des Kontaktträgers weitestgehend ausgeschlossen werden.

Die Fixierung des Deckelteils in der "Leseposition" erfolgt nach einer Ausführungsform unter Haftreibung, indem der Deckelteil unter Haftreibung auf den korrespondierenden Gehäusekörper aufschiebbar ist und unter Überwindung der Haftreibung von diesem wieder abgezogen werden kann.

Auf diese Weise werden jegliche Zusatzwerkzeuge vermieden. Ist die beschriebene seitliche Aussparung zwischen Deckelteil und Telefon-Gehäuse ausreichend dimensioniert, kann der Deckelteil sogar einfach mit einem Finger herausgedrückt werden.

Die konstruktive Gestaltung des Deckelteils kann sich den lokalen Gegebenheiten anpassen. Eine besonders einfache Ausführungsform sieht vor, daß der Deckelteil im Schnitt U-förmig gestaltet ist und die freien U-Schenkel längsverschiebbar in korrespondierenden Nuten des Gehäusekörpers geführt werden.

Wie sich bereits aus der vorstehenden Beschreibung der konstruktiven Gestaltung des Aufnahmegehäuses sowie seiner funktionellen Merkmale ergibt, ist der genannte Kontaktsatz mit sogenannten "Schleifkontakten" ausgebildet, das heißt, die auf der Chipkarte angeordneten Kontaktstreifen werden "schleifend" über die zugehörigen Kontakte des Kontaktträgers geführt. Üblicherweise sind die Kontakte des Kontaktträgers "vorgespannt" und ragen entsprechend in die Führungsbahn hinein, so daß sie nach Auflaufen der Karte gegen ihre Vorspannung weggedrückt werden, um so in jedem Fall eine sichere Kontaktierung zu erreichen. Gleichwohl kann es im Laufe der Zeit bei sehr häufigen Kartenwechseln zu einer "Ermüdung" der Vorspannung der Schleifkontakte des Kontaktträgers kommen. Um insbesondere auch in diesen Fällen eine sichere Kontaktierung zu gewährleisten, sieht eine weitere Ausführungsform der Erfindung vor, das Aufnahmegehäuse mit einem unter Vorspannung stehenden Spannbügel zu bestücken, der den Deckelteil im Bereich des Kontaktträgers in Richtung auf den Kontaktträger drückt.

Mit anderen Worten: Durch den zusätzlichen Spannbügel wird eine zusätzliche Druckkraft auf den Deckel, vom Deckel auf die Karte und von der Karte auf die Kontakte des Kontaktträgers ausgeübt, so daß Fehlkontaktierungen praktisch ausgeschlossen werden können.

Um die genannte Druckkraft zu optimieren, kann der Deckelteil entlang seines vom Spannbügel beaufschlagten Abschnittes geschwächt ausgebildet werden, so daß sich der Deckelteil in diesem Abschnitt innerhalb geringer Grenzen in Richtung auf die Führungsbahn "auswölbt".

Die Anordnung des Spannbügels hat den Nebeneffekt, daß dieser auf einer, mit dem Kontaktträger verbindbaren zugehörigen Leiterplatte befestigbar ist. Es hat sich nämlich herausgestellt, daß die Fixierung der Kontaktträger auf einer Leiterplatte angesichts der beengten räumlichen Verhältnisse hin und wieder Probleme bereitet. Kann nun das gesamte Gehäuse und damit auch der Kontaktträger mit Hilfe des genannten Spannbügels zusätzlich auf der Leiterplatte befestigt, zum Beispiel angelötet werden, erhöht dies die Betriebssicherheit der Einrichtung insgesamt.

Der Spannbügel kann dazu beispielsweise eine U-Form aufweisen, den Deckelteil beziehungsweise Gehäusekörper demnach dreiseitig umgreifen und mit seinen freien Enden, die bei Bedarf wiederum abgewinkelt sein können, auf der Leiterplatte befestigt werden. Ebenso wäre es aber natürlich auch möglich, den Spannbügel ausschließlich am Gehäusekörper zu befestigen.

Weitere Merkmale der Erfindung ergeben sich aus den Merkmalen der Unteransprüche sowie den sonstigen Anmeldungsunterlagen.

Die Erfindung wird nachstehend anhand eines Ausführungsbeispieles näher erläutert. Dabei zeigen - jeweils in schematisierter Darstellung -
- Figur 1 :: eine Aufsicht auf ein Gehäuse mit "gelöstem Deckelteil",
- Figur 2:: eine Aufsicht auf das Gehäuse nach Figur 1 mit "eingeschobenem Deckel", also in der Leseposition,
- Figur 3:: einen Längsschnitt durch das Gehäuse im Bereich des Kontaktträgers.

Mit dem Bezugszeichen 10 ist ein Gehäusekörper für ein Aufnahmegehäuse für eine in Handtelefone einsetzbare SIM-Karte bezeichnet. Der Gehäusekörper 10 weist in Längsrichtung verlaufende seitliche Nuten 12, 14 auf, in die vertikale Schenkel 16a, b eines mit dem Bezugszeichen 16 dargestellten Deckelteils eingreifen.

Auf diese Weise wird zwischen Deckelteil 16 und Gehäusekörper 10 eine Führungsbahn 18 für eine SIM-Karte 20 gebildet, wobei die Breite der Führungsbahn 18 gleich oder geringfügig größer als die Breite der SIM-Karte 20 und der Abstand zwischen Deckelteil 16 und Gehäusekörper 10 gleich oder geringfügig größer als die Dicke der SIM-Karte 20 ist, wie nachstehend noch näher beschrieben wird.

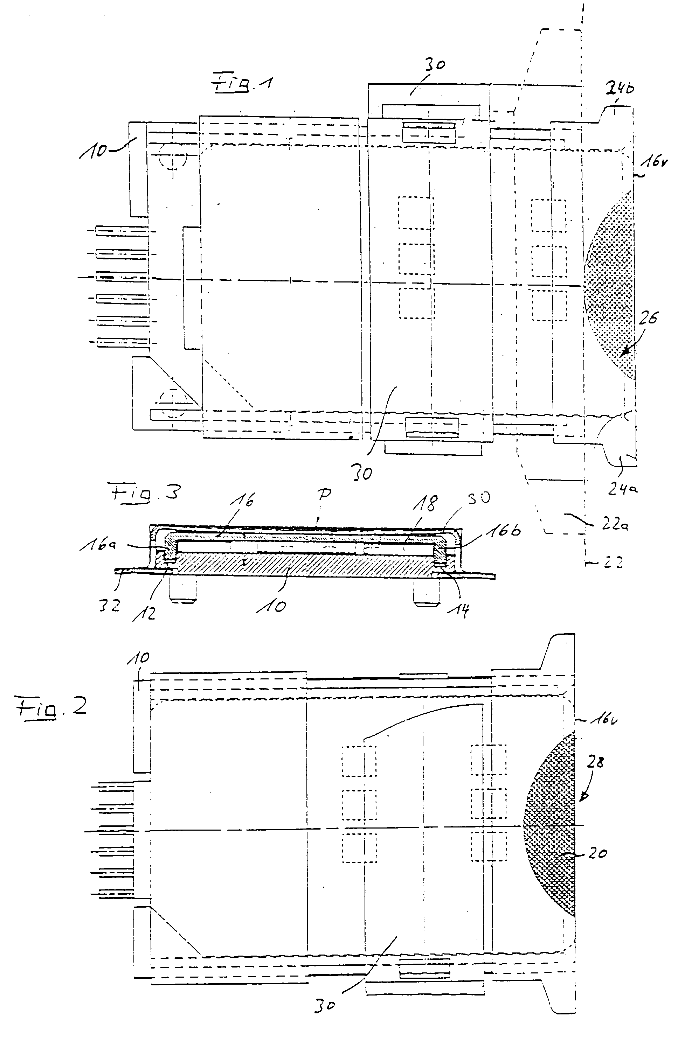

Der Deckelteil 16 ist über seine Schenkel 16a, 16b entlang der Nuten 12, 14 im Gehäusekörper 10 längsverschiebbar geführt, und zwar zwischen den durch die Figuren 1 und 2 dargestellten "Extrempositionen".

Dabei zeigt Figur 1 den Deckelteil 16 in einer Position, bei der die Karte 20 entnommen werden kann, wobei der Deckelteil 16 über die hier gestrichelt dargestellte Begrenzungslinie 22 eines zugehörigen Telefongehäuses nach vorne (in der Figur 1: nach rechts) herausgezogen ist. Zu diesem Zweck hat der Benutzer einen spitzen Gegenstand hinter einen von zwei seitlichen noppenartigen Vorsprüngen 24a, 24b auf den Schmalseiten des Deckelteils 16 geführt und mit diesem den Deckelteil 16 gegenüber dem Gehäusekörper 10 nach vorne herausgezogen. Wie die Figuren 1 und 2 erkennen lassen, weist der Deckelteil 16, ausgehend von seiner vorderen Stirnkante 16v eine Ausnehmung 26 auf, unterhalb der die SIM-Karte 20 (kreuzweise schraffiert) dargestellt ist, die nun leicht mit der Hand ergriffen und aus dem Gehäuse entnommen werden kann.

Um eine neue SIM-Karte einzusetzen, wird diese zwischen Deckelteil 16 und Gehäusekörper 10 in die Führungsbahn 18 hineingeschoben und anschließend gemeinsam mit dem Deckelteil 16 relativ zum Gehäusekörper 10 verschoben, bis der Deckelteil 16 seine in Figur 2 dargestellte Endposition, die der Leseposition für die Chipkarte entspricht, erreicht hat. Die Fixierung des Deckelteils 16 gegenüber dem Gehäusekörper 10 erfolgt dabei über Haftreibung.

In der genannten Leseposition liegen die Kontakte der SIM-Karte 20 gegenüber den Kontakten eines im Gehäusekörper 10 integrierten Kontaktträgers und über einen (hier nicht dargestellten) Endlagenschalter wird die elektrische Verbindung zwischen den wechselseitigen Kontakten hergestellt.

Um die Kontaktierung der genannten Kontakte zusätzlich zu optimieren, verläuft zwischen der vorderen Kante 16v und dem hinteren Ende (in den Figuren: linken Ende) des Deckelteils 16 ein Spannbügel 30 über den Deckelteil 16, wobei der Spannbügel 30 vorgespannt ist und mittig (Pfeil "P") auf den in diesem Bereich materialmäßig geschwächten Deckelteil 16 drückt (Figur 3).

Wie sich Figur 3 entnehmen läßt, ist der Spannbügel 30 U-förmig gestaltet und verläuft so seitlich um den Deckelteil 16 herum und ist mit seinen freien Enden auf einer hier mit 32 bezeichneten Leiterbahn, die sich an den Gehäusekörper 10 anschließt, angelötet.

Das dargestellte Aufnahmegehäuse ist - wie ausgeführt - im Boden eines Handtelefons eingesetzt, wobei der Boden des Handtelefons entsprechend an die konstruktiven Merkmale des Gehäuses angepaßt ist, und hier insbesondere im Bereich der Einstecköffnung 28 seitlich neben den noppenartigen Vorsprüngen 24a, b des Deckelteils 16 Aussparungen 22a aufweist, um über diese Aussparungen 22a auf die beschriebene Art und Weise die noppenartigen Vorsprünge 24a, b hintergreifen und somit den Deckelteil 16 aus dem Telefon-Gehäuse über dessen Boden 22 vorziehen zu können.

## Patentansprüche

1. Aufnahmegehäuse für eine Chipkarte, insbesondere für eine in Handtelefone einsetzbare SIM-Karte (20), mit
1.1 einer schlitzförmigen Einstecköffnung (28) für die Chipkarte,
1.2 einer Führungsbahn (18) für die Chipkarte,
1.3 einem, die Führungsbahn (18) einseitig begrenzenden Kontaktträger,
dadurch gekennzeichnet, daß
1.4 die mit der Einstecköffnung (28) endende Führungsbahn (18) zwischen einem Gehäusekörper (10) und einem auf den Gehäusekörper (10) aufschiebbaren und von diesem über eine definierte Strecke ziehbaren Deckelteil (16) ausgebildet ist, und
1.5 der Deckelteil (16), ausgehend von einer in der ausgezogenen Lage des Deckelteils (16) aus dem Gehäusekörper (10) ragenden Stirnkante (16v), eine Ausnehmung (26) aufweist.

2. Aufnahmegehäuse nach Anspruch 1, bei dem der Deckelteil (16) unter Haftreibung auf den Gehäusekörper (10) aufschiebbar und unter Überwindung der Haftreibung von diesem abziehbar ist.

3. Aufnahmegehäuse nach Anspruch 1 oder 2, bei dem der Deckelteil (16) im Schnitt U-förmig gestaltet ist und die freien U-Schenkel (16a, b) längsverschiebbar in korrespondierenden Nuten (12, 14) des Gehäusekörpers (10) geführt werden.

4. Aufnahmegehäuse nach einem der Ansprüche 1 bis 3, bei dem der Gehäusekörper (10) mit einem unter Vorspannung stehenden Spannbügel (30) bestückt ist, der den Deckelteil (16) im Bereich des Kontaktträgers in Richtung auf den Kontaktträger drückt.

5. Aufnahmegehäuse nach Anspruch 4, bei dem der Deckelteil (16) entlang seines vom Spannbügel (30) beaufschlagten Abschnitts materialgeschwächt ausgebildet ist.

6. Aufnahmegehäuse nach Anspruch 4 oder 5, bei dem der Spannbügel (30) auf einer, mit dem Kontaktträger verbindbaren zugehörigen Leiterplatte (32) befestigbar ist.

7. Aufnahmegehäuse nach einem der Ansprüche 4 bis 6, bei dem der Spannbügel (30) im Schnitt eine U-Form aufweist, den Deckelteil (16) beziehungsweise Gehäusekörper (10) dreiseitig umgreift und mit seinen freien Enden am Gehäusekörper befestigt oder auf der Leiterplatte (32) befestigbar ist.

8. Aufnahmegehäuse nach einem der Ansprüche 1 bis 7, bei dem die Ausnehmung (26) etwa halbkreisförmig gestaltet ist.

## Claims

1. Housing for receiving a chip card, especially a SIM card (20), insertable into a hand telephone, comprising:
1.1 a slit-shaped insertion opening (28) for the chip card,
1.2. a guide track (18) for the chip card,
1.3. a contact carrier delimiting one side of the guide track (18)
characterized in that
1.4. the guide track (18) ending by the insertion opening (28) is provided between a housing body (10) and a cover part (16) which can be pushed onto the housing body (10) and can be pulled off same along a defined distance, and
1.5. the cover part (16) has an indentation (26) starting at its front edge (16) in a position of the cover part (16) when pulled off the housing body (10).

2. Housing according to claim 1, wherein the cover part (16) can be pushed onto the housing body (10) by contact friction and can be removed therefrom by overcoming the contact friction.

3. Housing according to claim 1 or 2, in which the cover part (16) is U-shaped and ist free U-legs (16a,b) can be displaced along corresponding grooves (12,14) of the housing body (10).

4. Housing according to one of claims 1 to 3, wherein the housing body (10) is provided with a tension clamp (30) that is pre-tensed and that presses the cover part (16) in the region of the contact carrier towards said contact carrier.

5. Housing according to claim 4, wherein the cover part (16) is weakened along the section onto which said tension clamp (30) acts.

6. Housing according to claim 4 or 5, wherein the tension clamp (30) is attachable to a printed circuit board (32) that can be connected to the contact carrier.

7. Housing according to one of claims 4 to 6, wherein the tension clamp (30) is U-shaped, encompasses the cover part (16) or housing body (10) respectively on three sides, and which can be attached to the housing body or on the printed circuit board (32) with its free ends.

8. Housing according to one of claims 1 to 7, wherein the indentation (26) is designed approximately semicircular.

## Revendications

1. Boîtier de logement pour une carte à puce, en particulier pour une carte SIM (20) utilisable sur des téléphones mobiles, avec
1.1 une ouverture d'insertion (28) en forme de fente pour la carte à puce,
1.2 une glissière (18) pour la carte à puce,
1.3 un porte-contact délimitant la glissière (18) sur un côté,
caractérisé en ce que
1.4 la glissière (18) se terminant par l'ouverture d'insertion (28) est réalisée entre un corps de boîtier (10) et une partie de couvercle (16) pouvant se glisser sur le corps de boîtier (10) et pouvant être retirée de celui-ci sur un tronçon défini, et
1.5 et en ce que la partie de couvercle (16) présente un évidement (26) à partir d'un bord frontal (16v) qui déborde du corps de boîtier (10) dans la position retirée de la partie de couvercle (16).

2. Boîtier de logement selon la revendication 1, dans lequel la partie de couvercle (16) peut être glissée sur le corps de boîtier (10) avec un frottement par adhérence et peut être retirée de ce corps en surmontant le frottement par adhérence.

3. Boîtier de logement selon la revendication 1 ou 2, dans lequel la partie de couvercle (16) est conçue en forme de U vue en coupe, et les branches libres en U (16a, b) sont guidées de façon à pouvoir coulisser en longueur dans des rainures (12, 14) correspondantes du corps de boîtier (10).

4. Boîtier de logement selon l'une quelconque des revendications 1 à 3, dans lequel le corps de boîtier (10) est pourvu d'une bride de serrage (30) sous prétension qui appuie la partie de couvercle (16) dans la zone du porte-contact en direction du porte-contact.

5. Boîtier de logement selon la revendication 4, dans lequel la partie de couvercle (16) est conçue avec une couche de matériau plus mince le long de sa partie sollicitée par la bride de serrage (30).

6. Boîtier de logement selon la revendication 4 ou 5, dans lequel la bride de serrage (30) peut être fixée sur une carte de circuits imprimés (32) spécifique et pouvant être reliée au porte-contact.

7. Boîtier de logement selon l'une quelconque des revendications 4 à 6, dans lequel la bride de serrage (30) présente une forme de U vue en coupe, enveloppe la partie de couvercle (16) respectivement le corps de boîtier (10) sur les trois côtés et est fixée par ses extrémités libres sur le corps de boîtier ou peut être fixée sur la carte de circuits imprimés (32).

8. Boîtier de logement selon l'une quelconque des revendications 1 à 7, dans lequel l'évidement (26) est conçu avec une forme sensiblement semi-circulaire.
